# EUROPÄISCHE PATENTANMELDUNG

(11) **EP 4 830 862 A1**
(43) Veröffentlichungstag der Anmeldung: **28.10.2026**
(21) Anmeldenummer: 26173947.8
(22) Anmeldetag: 22.04.2026
(51) Int. Cl.: B23K 26/066, B23K 26/57, B23K 26/244

(54) **MASKE FÜR DAS LASERSCHWEISSEN**

(30) Priorität: 25.04.2025 DE 102025115990
(71) Anmelder: Evosys Laser GmbH, 91058 Erlangen (DE)
(72) Erfinder: Kroth, Lea, 91058 Erlangen (DE)
(74) Vertreter: Dr. Gassner & Partner mbB

(57) **Zusammenfassung**

Maske (1) für das Laserschweißen, mit wenigstens einem ersten für Laserstrahlung (7) durchlässigen Flächenabschnitt (3), wobei die Maske (1) wenigstens einen zweiten Flächenabschnitt (4) mit einer strukturierten Fläche aufweist, die so ausgebildet ist, dass auftreffende Laserstrahlung (7) gebrochen oder reflektiert und seitlich weggeleitet wird.

## Beschreibung

Die Erfindung betrifft eine Maske für das Laserschweißen mit wenigstens einem ersten für Laserstrahlung durchlässigen Flächenabschnitt.

Eine Maske für das Laserschweißen ist ein Hilfsmittel, das dazu dient, den Laserstrahl in kontrollierter Weise passieren zu lassen oder zu blockieren. Der Laserstrahl durchdringt den für Laserstrahlung durchlässigen Flächenabschnitt und bestrahlt die Oberfläche eines zu bearbeitenden Bauteils, beispielsweise um eine Schweißnaht zu erzeugen. Diejenigen Abschnitte der Oberfläche des zu bearbeitenden Bauteils, die nicht bestrahlt werden sollen, werden durch für Laserstrahlung undurchlässige Flächenabschnitte der Maske abgeschattet.

Herkömmliche Masken können eine Chrombeschichtung aufweisen. Die Chrombeschichtung absorbiert und reflektiert die Laserstrahlung. Bei einer zu hohen Leistungsdichte der Laserstrahlung kann die Maske allerdings beschädigt werden.

Daneben kann die unvermeidliche Streuung und Reflexion der Laserstrahlung zu Sicherheitsrisiken für das umgebende Personal und die Geräte führen, sowie zu einer ineffizienten Nutzung der für die Erzeugung der Laserstrahlung benötigten Energie.

Es besteht daher Bedarf an einer verbesserten Maske, bei der eine Beschädigung der Maske bei einer zu hohen Leistungsdichte des Laserstrahls vermieden wird, darüber hinaus soll auch das Risiko unerwünschter Reflexionen der Laserstrahlung verringert werden.

Der Erfindung liegt daher die Aufgabe zugrunde, eine Maske anzugeben, bei der das Risiko unerwünschter Reflexionen der Laserstrahlung verringert ist.

Zur Lösung dieser Aufgabe ist eine Maske mit den Merkmalen des Anspruchs 1 vorgesehen.

Die erfindungsgemäße Maske für das Laserschweißen, die wenigstens einen ersten für Laserstrahlung durchlässigen Flächenabschnitt aufweist, zeichnet sich dadurch aus, dass sie wenigstens einen zweiten Flächenabschnitt mit einer strukturierten Fläche aufweist, die so ausgebildet ist, dass auftreffende Laserstrahlung gebrochen oder reflektiert und seitlich weggeleitet wird.

Die Erfindung beruht auf der Erkenntnis, dass unerwünschte und gegebenenfalls sogar gefährliche Reflexionen von auf die Maske auftreffenden Laserstrahlen verringert oder verhindert werden können, indem die Laserstrahlung an der strukturierten Fläche gebrochen oder reflektiert und seitlich weggeleitet wird. Dadurch wird auch das Risiko vermieden, dass die Maske bei einer zu hohen Leistungsdichte beschädigt wird.

Die Maske weist wenigstens einen ersten Flächenabschnitt auf, der für Laserstrahlung durchlässig ist, und ermöglicht einen kontrollierten Durchgang des Laserstrahls durch den Flächenabschnitt. Dies ist förderlich für die präzise Bearbeitung ausgewählter Bereiche und die effiziente Nutzung der Laserstrahlung. Es versteht sich, dass die erfindungsgemäße Maske mehrere oder viele erste für Laserstrahlung durchlässige Flächenabschnitte aufweisen kann.

Ein wesentliches Merkmal der erfindungsgemäßen Maske stellt der wenigstens eine zweite Flächenabschnitt dar, der eine strukturierte Fläche aufweist. Diese strukturierte Fläche ist so gestaltet, dass darauf auftreffende Laserstrahlung gebrochen oder reflektiert und seitlich weggeleitet wird. Dies bewirkt, dass Laserstrahlung durch die Struktur der Fläche eine Richtungsänderung erfährt und nicht unkontrolliert reflektiert wird. Die Struktur kann verschiedene Formen annehmen, wie beispielsweise Prismen, wellenförmige Muster oder andere geometrische Designs, die den Winkel des einfallenden Strahls verändern können.

Aufgrund dieser Eigenschaft kann die erfindungsgemäße Maske auch als refraktive Maske bezeichnet werden.

Durch die Kombination eines für Laserstrahlung durchlässigen ersten Flächenabschnitts mit einem strukturierten Abschnitt als zweiten Flächenabschnitt wird es möglich, dass bestimmte Bereiche der Oberfläche direkt von der Laserstrahlung erreicht und bearbeitet werden können, während andere Bereiche durch die Struktur der Maske abgeschirmt werden. Dies ist vorteilhaft bei Anwendungen, in denen Bereiche eines zu bearbeitenden Objekts gegenüber der Laserstrahlung abgeschirmt werden sollen, ohne dass unerwünschte Reflexionen auftreten. Der die strukturierte Fläche aufweisende zweite Flächenabschnitt trägt zur Sicherheit bei, indem er verhindert, dass Laserstrahlung unkontrolliert in die Umgebung streut.

Zusammenfassend trägt die erfindungsgemäße refraktive Maske dazu bei, die Effizienz und Präzision beim Laserschweißen zu erhöhen und gleichzeitig die Sicherheit im Umgang mit Laserstrahlung zu verbessern.

Bei der erfindungsgemäßen Maske kann es vorgesehen sein, dass die strukturierte Fläche unter einem bestimmten Winkel in Bezug zur Oberseite der Maske angeordnet ist. Diese Anordnung trägt dazu bei, die Brechung oder Reflexion des einfallenden Laserstrahls zu steuern und zu optimieren. Durch die gezielte Winkelausrichtung der strukturierten Fläche ist es möglich, die Laserstrahlung so zu leiten, dass sie seitlich aus der vorgesehenen Bahn gelenkt werden kann. Der Winkel ist anpassbar und kann auf die spezifischen Anforderungen des Schweißprozesses abgestimmt werden. Diese Winkelanordnung kann helfen, Streuverluste zu minimieren und das Risiko einer unerwünschten Laserexposition in der Umgebung zu reduzieren, indem die Strahlführung gezielt erfolgt.

Vorzugsweise ist der Winkel der strukturierten Fläche der erfindungsgemäßen Maske so gewählt, dass Totalreflexion auftritt und Laserstrahlung innerhalb der Maske bis zu einer Seitenfläche geleitet wird. Totalreflexion ist ein optisches Phänomen, das bei bestimmten Winkeln auftritt, wobei der Strahl vollständig innerhalb des Mediums reflektiert wird und somit nicht durch die Grenzfläche austreten kann. Durch die Totalreflexion wird sichergestellt, dass die Laserstrahlung die Maske nicht versehentlich verlässt oder in unerwünschte Bereiche streut.

Bei der erfindungsgemäßen Maske wird es bevorzugt, dass sich die strukturierte Fläche von einer Oberseite der Maske nach innen oder außen erstreckt. Diese Ausgestaltung ermöglicht es, die Maske an unterschiedliche Anforderungen der schweißtechnischen Anwendung anzupassen.

Bei der erfindungsgemäßen Maske kann es auch vorgesehen sein, dass zwei benachbarte strukturierte Flächen, die als Reflexionsflächen wirken, symmetrisch oder unsymmetrisch zu einer Senkrechten zur Oberseite der Maske angeordnet sind und vorzugsweise eine V-förmige Ausnehmung bilden. Diese Anordnung der Reflexionsflächen ermöglicht es, die einfallende Laserstrahlung in bestimmte Richtungen zu reflektieren oder umzuleiten. Eine V-förmige Ausnehmung kann vergleichsweise einfach hergestellt werden. Die durch benachbarte Reflexionsflächen gebildete V-förmige Ausnehmung kann einfache oder komplexe Geometrien umfassen, die das Laserlicht genau brechen und reflektieren, sodass es zu einer Seite der Maske weggebrochen und geleitet wird. In der Praxis ermöglicht die Form und Anordnung der strukturierten Flächen bzw. der Reflexionsflächen nicht nur die präzise Kontrolle des Laserstrahls, sondern auch einen verbesserten Schutz, indem eine unerwünschte Streuung der Laserstrahlung in die Umgebung der Maske verhindert wird.

Vorzugsweise besteht die erfindungsgemäße Maske aus einem für Laserstrahlung transparenten Material und weist eine reflektierende Beschichtung auf. Die Maske kann insbesondere aus Glas hergestellt sein. Die reflektierende Beschichtung kann als metallische Beschichtung oder als dielektrische Beschichtung ausgebildet sein. Die reflektierende Schicht auf der Oberseite des durchsichtigen Materials ermöglicht es, das Laserlicht gezielt zu brechen oder zu reflektieren, um sicherzustellen, dass die Laserstrahlung präzise geführt wird. Dielektrische Beschichtungen bestehen aus einem elektrisch isolierenden Material. Durch mehrere Schichten mit unterschiedlichen Brechungsindizes kann ein gewünschtes Reflexionsverhalten über einen bestimmten Wellenlängenbereich erhalten werden.

Daneben betrifft die Erfindung eine Anordnung für das Laserschweißen, mit einem Laser und einer Maske der beschriebenen Art, die im Strahlengang des Lasers auf einem zu bestrahlenden Objekt anordenbar ist.

Der Laser erzeugt den fokussierten Laserstrahl, der für präzise Schweißvorgänge geeignet ist. Die Maske kann in den Strahlengang eingesetzt werden, um die Strahlführung zu optimieren. Dies erfolgt durch gezielte Lenkung, Brechung oder Reflexion der Laserstrahlung. Durch die Integration der erfindungsgemäßen refraktiven Maske in den Strahlengang wird ein Schutz gegenüber unkontrolliert gestreuter Laserstrahlung geschaffen.

Bei der erfindungsgemäßen Anordnung kann die Maske so im Strahlengang angeordnet werden, dass sich die oder eine strukturierte Fläche der Maske bezüglich des Laserstrahlers auf der Vorderseite und/oder auf der Rückseite der Maske befindet.

Wenn die strukturierte Fläche auf der Vorderseite der Maske angeordnet ist, kann sie direkt die einfallende Laserstrahlung beeinflussen, indem sie diese bricht, reflektiert oder umleitet, bevor die Laserstrahlung die Maske passiert. Dies kann die präzise Initialführung des Strahls ermöglichen und unerwünschte Streuung verringern.

Alternativ, wenn die strukturierte Fläche auf der Rückseite der Maske angeordnet ist, ermöglicht sie eine Strahlmodifikation nach dem Passieren des durchlässigen Flächenabschnitts. Dadurch kann die Laserstrahlung gezielt umgeleitet werden.

Die erfindungsgemäße Anordnung für das Laserschweißen kann einen Scanner zum Auslenken des Laserstrahls umfassen, wobei der Winkel zwischen der strukturierten Fläche der Maske und der Laserstrahlung 60° oder weniger beträgt. Vorzugsweise kann der Winkel 50° oder weniger betragen.

Der Einsatz eines Scanners ermöglicht die präzise Positionierung des Laserstrahls. Durch die optimierte Wahl des Winkels kann eine genaue und sichere Auslenkung des Laserstrahls auf die Maske und das zu bestrahlende Objekt ermöglicht werden.

Die erfindungsgemäße Anordnung für das Laserschweißen kann eine durchlässige Platte umfassen, die hinter der Maske positioniert ist, um nach dem Passieren der Maske die Laserstrahlung zu brechen. Als spezielle Ausführung kann die Platte eine Chrombeschichtung aufweisen. Diese Oberfläche ermöglicht eine verbesserte Reflexion der Laserstrahlen.

Die Platte kann unterschiedlich ausgebildet sein. Eine Variante sieht eine Glasplatte vor, die für Laserstrahlung durchlässig ist. Alternativ kann eine Platte in Betracht gezogen werden, die mit Reflexionsflächen ausgestattet ist. Diese Flächen können unter einem spezifischen Winkel zur Oberfläche angeordnet sein, um eine gezielte Brechung und seitliche Umleitung der Laserstrahlung zu ermöglichen, vorzugsweise auch durch Totalreflexion.

Schließlich kann die Platte aus einem Material bestehen, das einen anderen Brechungsindex als die Maske aufweist. Auf diese Weise können durch unterschiedliche Materialeigenschaften verschiedene Brechungseffekte erzielt werden, die zur Optimierung der Strahlführung verwendet werden. Diese Variation des Brechungsindex' bietet zusätzliche Möglichkeiten, die Strahlenergie bei unterschiedlichen Anwendungen gezielt zu beeinflussen.

Die Anordnung für das Laserschweißen kann mit einer Spannvorrichtung ausgestattet sein, die das Anpressen der Maske gegen ein zu bestrahlendes Objekt ermöglicht. Diese Spannvorrichtung ist dazu geeignet, die Maske sicher und stabil in ihrer Position zu halten, sowohl zur Optimierung des Schweißprozesses als auch zur Reduzierung von unerwünschten Bewegungen oder Abweichungen der Maske von der vorgesehenen Lage.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: ein erstes Ausführungsbeispiel einer erfindungsgemäßen Maske in einer geschnittenen Ansicht;
- Fig. 2: ein Ausführungsbeispiel einer Anordnung mit einer erfindungsgemäßen Maske und einer Glasplatte; und
- Fig. 3: ein weiteres Ausführungsbeispiel einer Anordnung mit einer erfindungsgemäßen Maske.

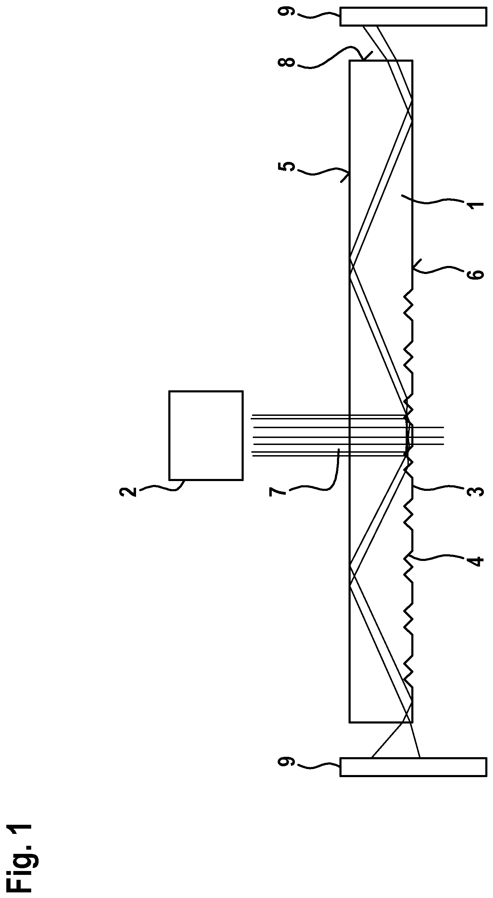

Fig. 1 ist eine geschnittene Ansicht und zeigt eine Maske 1, die durch Laserstrahlen 7, die durch einen Laser 2 emittiert werden, beaufschlagt wird. Ein (nicht dargestellter) Scanner dient zum Auslenken des Laserstrahls. Die Maske 1 umfasst für Laserstrahlung durchlässige erste Flächenabschnitte 3 und für Laserstrahlung undurchlässige zweite Flächenabschnitte 4. Die zweiten Flächenabschnitte 4 weisen eine Strukturierung auf, die in diesem Ausführungsbeispiel unter einem Winkel zur Oberseite 5 der Maske 1 angeordnet ist. Die zweiten Flächenabschnitte 4 befinden sich an der Unterseite 6 der Maske 1, d. h. an der von dem Laserstrahler 2 entfernten Seite.

In dem dargestellten Ausführungsbeispiel sind jeweils zwei benachbarte zweite Flächenabschnitte 4 symmetrisch in einer V-Form angeordnet. Die zweiten Flächenabschnitte 4 bilden somit V-förmige Vertiefungen an der Unterseite 6 der Maske 1. Bei anderen Ausführungsbeispielen können die zweiten Flächenabschnitte auch unsymmetrisch ausgebildet sein, d. h. sie können unterschiedliche Winkel zur Oberseite 5 der Maske 1 aufweisen.

In Fig. 1 erkennt man, dass die Laserstrahlung 7 die ersten Flächenabschnitte 3 passiert, d. h. die ersten Flächenabschnitte 3 sind für Laserstrahlung 7 durchlässig. Die Maske 1 weist an denjenigen Stellen erste Flächenabschnitte 3 auf, an denen die Laserstrahlung 7 die Maske 1 unverändert passieren soll. Die Maske 1 wird auf der Oberseite eines zu bestrahlenden Objekts angeordnet. Es kann sich dabei auch um zwei Objekte bzw. Fügepartner handeln, die miteinander verschweißt werden. Die Laserstrahlung 7 durchdringt die ersten Flächenabschnitte 3 und bewirkt ein Verschweißen der beiden Fügepartner.

In Fig. 1 ist auch erkennbar, dass die zweiten Flächenabschnitte 4 so ausgebildet sind, dass auftreffende Laserstrahlung 7 gebrochen oder reflektiert und seitlich weggeleitet wird. Die Winkel der ersten Flächenabschnitte 3 sind dabei so gewählt, dass innerhalb der Maske 1 Totalreflexion auftritt. Die Laserstrahlung 7 wird innerhalb der Maske 1 mehrfach reflektiert, bis sie an einer Seitenfläche 8 austritt. Seitlich neben der Maske 1 sind Aufnahmen 9 ausgebildet, die als Strahlfalle dienen und die Laserstrahlung absorbieren. Die Maske 1 verhindert, dass auftreffende Laserstrahlung 7 unkontrolliert reflektiert wird. Dadurch wird sowohl eine Beeinträchtigung von Anlagenkomponenten, beispielsweise eines Laserscanners, als auch eine Gefährdung von Personen verhindert.

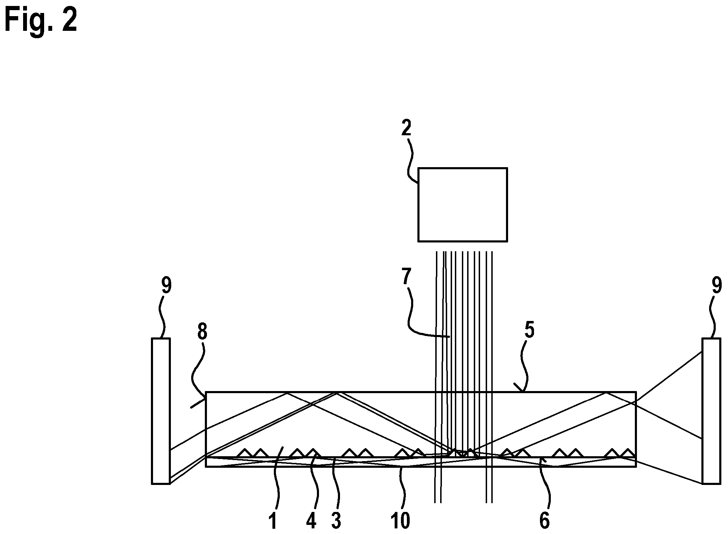

Fig. 2 zeigt eine Anordnung mit der in Fig. 1 gezeigten Maske 1 und einer Glasplatte 10. Für identische Komponenten werden dieselben Bezugszeichen wie in Fig. 1 verwendet. Die Maske 1 wird mit Laserstrahlung 7 beaufschlagt, die die ersten, für Laserstrahlung durchlässigen Flächenabschnitte 3 passiert. Die Laserstrahlung trifft auf ein darunter angeordnetes zu bestrahlendes Objekt auf, beispielsweise um eine Schweißnaht zu erzeugen oder zwei Fügepartner miteinander zu verbinden.

Andererseits wird die Laserstrahlung 7 beim Auftreffen auf die strukturierten Flächen der zweiten Flächenabschnitte 4 gebrochen oder reflektiert. Durch Totalreflexion wird die Laserstrahlung 7 über die Seitenflächen 8 weggeleitet.

In diesem Ausführungsbeispiel ist unterhalb der Maske 1 eine für Laserstrahlung durchlässige Glasplatte 10 angeordnet. Die Glasplatte 10 hat die Wirkung, dass Laserstrahlen, die trotz der strukturierten zweiten Flächenabschnitte 4 an den abzuschattenden Bereichen der Maske 1 austreten, an der Glasplatte 10 gebrochen und ebenfalls durch Totalreflexion seitlich weggeleitet werden. Auf diese Weise kann sichergestellt werden, dass keine Laserstrahlung 7 in abzuschattende Bereiche gelangt. Ein Verschweißen des oder der unter der Glasplatte 10 angeordneten Objekte erfolgt nur im Bereich der ersten, für Laserstrahlung 7 durchlässigen Flächenabschnitte 3.

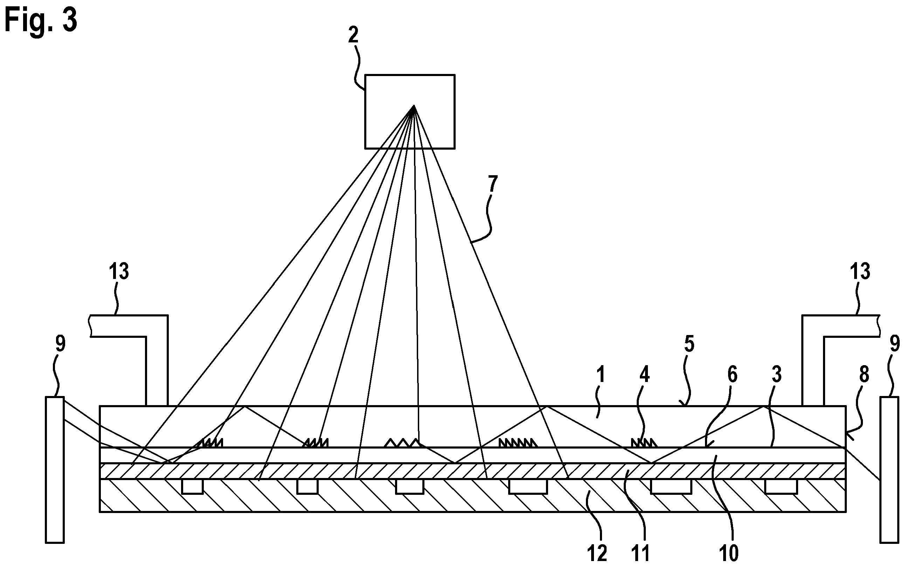

Fig. 3 zeigt eine Anordnung, umfassend den Laser 2 mit Scanner, die Maske 1 und die darunter angeordnete Glasplatte 10. Man erkennt, dass die Laserstrahlung 7 durch den Scanner so abgelenkt wird, dass er auf unterschiedliche Stellen der Maske 1 auftritt. Die Laserstrahlung 7 durchdringt die dafür durchlässigen ersten Flächenabschnitte 3 und die Glasplatte 10. Unterhalb der Glasplatte 10 befinden sich ein oberer Fügepartner 11 und ein unterer Fügepartner 12. Eine schematisch dargestellte Spannvorrichtung 13 presst die Maske 1, die Glasplatte 10 und die beiden Fügepartner 11, 12 gegeneinander.

Laserstrahlung 7, die auf die zweiten Flächenabschnitte 4 auftrifft, wird in Übereinstimmung mit den vorangehenden Ausführungsbeispielen gebrochen und innerhalb der Maske 1 seitlich weggeleitet. Laserstrahlung, die die dafür durchlässigen Flächenabschnitte 3 passiert, erwärmt bzw. erwärmt bzw. schmilzt eine zwischen den beiden Fügepartnern 11, 12 gebildete Kontaktfläche, wodurch die beiden Fügepartner 11,12 lokal miteinander verschweißt werden.

### Bezugszeichenliste

- 1: Maske
- 2: Laser
- 3: erster Flächenabschnitt
- 4: zweiter Flächenabschnitt
- 5: Oberseite
- 6: Unterseite
- 7: Laserstrahlung
- 8: Seitenfläche
- 9: Aufnahme
- 10: Glasplatte
- 11: oberer Fügepartner
- 12: unterer Fügepartner
- 13: Spannvorrichtung

## Patentansprüche

1. Maske (1) für das Laserschweißen, mit wenigstens einem ersten für Laserstrahlung (7) durchlässigen Flächenabschnitt (3),
**dadurch gekennzeichnet,**
**dass** die Maske (1) wenigstens einen zweiten Flächenabschnitt (4) mit einer strukturierten Fläche aufweist, die so ausgebildet ist, dass auftreffende Laserstrahlung (7) gebrochen oder reflektiert und seitlich weggeleitet wird.

2. Maske nach Anspruch 1,
wobei die strukturierte Fläche unter einem Winkel zu einer Oberseite der Maske (1) angeordnet ist.

3. Maske nach Anspruch 2,
wobei der Winkel der strukturierten Fläche so gewählt ist, dass Totalreflexion auftritt und Laserstrahlung (7) innerhalb der Maske (1) bis zu einer Seitenfläche (8) geleitet wird.

4. Maske nach einem der vorangehenden Ansprüche,
wobei die strukturierte Fläche sich von einer Oberfläche der Maske (1) nach innen oder außen erstreckt.

5. Maske nach einem der vorangehenden Ansprüche,
wobei zwei benachbarte strukturierte Flächen symmetrisch oder unsymmetrisch zu einer Senkrechten zur Oberfläche der Maske (1) angeordnet sind und vorzugsweise eine V-förmige Ausnehmung bilden.

6. Maske nach einem der vorangehenden Ansprüche,
wobei die Maske (1) aus einem für Laserstrahlung (7) transparenten Material, vorzugsweise aus Glas, besteht und eine reflektierende Beschichtung, vorzugsweise eine metallische oder dielektrische Beschichtung, aufweist.

7. Anordnung für das Laserschweißen, mit einem Laser (2) und einer Maske (1) nach einem der Ansprüche 1 bis 6, die im Strahlengang des Lasers (2) auf einem zu bestrahlenden Objekt anordenbar ist.

8. Anordnung nach Anspruch 7,
wobei die Maske (1) so im Strahlengang angeordnet ist, dass sich die oder eine strukturierte Fläche der Maske (1) bezüglich des Lasers (2) auf der Vorderseite und/oder auf der Rückseite der Maske (1) befindet.

9. Anordnung nach Anspruch 7 oder 8, mit einem Scanner zum Auslenken der Laserstrahlung (7), wobei der Winkel zwischen der strukturierten Fläche der Maske (1) und der Laserstrahlung (7) 60° oder weniger, vorzugsweise 50° oder weniger, beträgt.

10. Anordnung nach einem der Ansprüche 7 bis 9,
wobei hinter der Maske (1) eine für Laserstrahlung (7) durchlässige Platte (10) zum Brechen von Laserstrahlung (7) nach dem Passieren der Maske (1) angeordnet ist, die vorzugsweise eine Chrombeschichtung aufweist.

11. Anordnung nach Anspruch 10,
wobei die für Laserstrahlung (7) durchlässige Platte (10) aus der folgenden Liste gewählt ist:
- Glasplatte,
- Platte mit Reflexionsflächen, die derart unter einem Winkel zur Oberfläche angeordnet sind, dass darauf auftreffende Laserstrahlung (7) gebrochen und seitlich weggeleitet wird, vorzugsweise durch Totalreflexion,
- Platte aus einem Material mit einem anderen Brechungsindex als die Maske (1).

12. Anordnung nach einem der Ansprüche 7 bis 11, mit einer Spannvorrichtung (13) zum Anpressen der Maske (1) gegen ein zu bestrahlendes Objekt.
